# EUROPÄISCHE PATENTANMELDUNG

(11) **EP 1 754 568 A1**
(43) Veröffentlichungstag der Anmeldung: **21.02.2007**
(21) Anmeldenummer: 05018056.1
(22) Anmeldetag: 19.08.2005
(51) Int. Cl.: B23Q 11/08, B23Q 1/01, B23Q 1/66

(54) **Werkzeugmaschine mit automatischer Abdeckung im Dachbereich**

(71) Anmelder: Mikron Agie Charmilles AG, 2560 Nidau (CH)
(72) Erfinder: Konvicka, Jan, 2502 Biel (CH); Reimann, Markus, 3250 Lyss (CH)
(74) Vertreter: Weiss, Wolfgang

(57) **Zusammenfassung**

Die Erfindung betrifft eine Werkzeugmaschine (1, 1'), insbesondere Bohr- und Fräsmaschine mit einem Maschinenbett (2), mit Seitenwänden (3, 4) und Türen (5, 6, 7) aufweisenden Gehäuse (20), mit einem festen, schwenk- oder drehbaren Werktisch (8, 9) und mit einem in y - Richtung verfahrbaren Schlitten (10) zur Aufnahme eines in x - z Richtung verfahrbaren Spindelstocks (11) zur Aufnahme von Werkzeugen (12), wobei die vordere Tür (5) Vergrösserung des Arbeits- und Beladebereichs (21) nach oben holmenfrei ausgebildet ist, der Dachbereich (13) der Maschine (1,1') eine automatisch bedienbare Abdeckung (16) aufweist, der hintere Bereich (22) der Maschine (1, 1') einen integrierbaren automatischen Palettenwechsler(14) aufweist und der Maschine (1, 1') ein automatischer Werkzeugwechsler (15) zugeordnet ist.

## Beschreibung

Die Erfindung betrifft eine Werkzeugmaschine insbesondere Bohr - und Fräsmaschine mit einem Maschinenbett, mit Seitenwänden und Türen aufweisenden Gehäuse, mit einem festen, schwenk- oder drehbaren Werktisch und mit einem in y - Richtung verfahrbaren Schlitten zur Aufnahme eines in x - z Richtung verfahrbaren Spindelstocks zur Aufnahme von Werkzeugen.

In der EP 0 712 682 wird eine Werkzeugmaschine, insbesondere eine Bohr- und Fräsmaschine, vorgeschlagen, die mit einem Maschinenständer versehen ist, auf dem ein an Führungsschienen geführter, motorisch angetriebener Längsschlitten horizontal bewegbar ist. Ein eine rotierende Antriebsvorrichtung für wenigstens ein Werkzeug aufweisender Bearbeitungskopf ist am Längsschlitten in wenigstens einer weiteren Bewegungsrichtung motorisch bewegbar. Der Maschinenständer weist zwei beabstandete Seitenwandungen auf, auf denen der Längsschlitten wenigstens teilweise geführt ist und deren Zwischenraum als Bearbeitungsbereich ausgebildet ist. An jeder der beiden Seitenwandungen ist eine Befestigungsstelle für wenigstens eine schwenkbare Werkstück-Halteeinrichtung vorgesehen, wobei die beiden Befestigungsstellen in einer eine Schwenkachse bildenden horizontalen Linie quer zur Längsrichtung der Führungsschienen fluchten. Bei einer solchen Anordnung ist die Werkstück-Halteeinrichtung leicht zugänglich und wartungsfreundlich sowie auf einfache Weise auswechselbar. Bearbeitungsrückstände, wie Späne, Schmier- und Kühlmittel, können nicht oder nur schwer zu den Lagerstellen und Antriebsmitteln gelangen.

Eine als Fräsmaschine ausgebildete Werkzeugmaschine dieser Gattung ist aus der DE 4203 994 bekannt. Bei diesem weit verbreiteten Typ einer Fräsmaschine bewegt sich der Schlitten in der Längsrichtung, und der Bearbeitungskopf ist am Schlitten vertikal bewegbar angeordnet. Eine Bewegung in der Querrichtung erfolgt durch den entsprechend angetriebenen Werkstücktisch. Dessen Antrieb im unteren Bereich der Maschine muss in aufwendiger Weise gegen Bearbeitungsrückstände, wie Späne und Schmiermittel, geschützt werden. Bei einer größeren seitlichen Auslenkung des Werkstücktisches besteht die Gefahr einer wenn auch nur sehr geringen Verformung durch die eigene und die Werkstückmasse sowie die durch das Werkzeug einwirkenden Kräfte, so dass in der Praxis der Werkstücktisch anstelle einer linearen Bewegungsbahn zum Ausgleich der Verformung eine kreisbahnartige Bahn mit einem Radius von einigen Kilometern besitzt, um hochpräzise Fräsarbeiten ausführen zu können. Hierdurch wird der Bewegungsapparat insbesondere für den Werkstücktisch bei hochpräzisen Fräsmaschinen sehr aufwendig und teuer. Für eine 5-Achs-Bearbeitung muss zusätzlich noch der Werkstücktisch oder der Bearbeitungskopf schwenkbar ausgebildet sein, was den konstruktiven Aufwand noch erhöht.

Es sind auch so genannte Gantry-Bauformen von Fräsmaschinen bekannt, bei denen der den Bearbeitungskopf tragende Längsschlitten auf zwei parallelen Schienen geführt ist, die an der Oberseite zweier Seitenwandungen des Maschinenständers angeordnet sind. Der Längsschlitten ist dabei über vier Führungselemente an den beiden Führungsschienen geführt. Auch wird für eine 5-Achs-Bearbeitung entweder der Bearbeitungskopf in konstruktiv aufwendiger Weise schwenkbar ausgebildet, oder der auf einer Bodenwandung des Maschinenständers gelagerte Werkstücktisch muss schwenkbar ausgebildet sein, wodurch die Gefahr besteht, dass Bearbeitungsrückstände, Schmier- und Kühlmittel in die Antriebsvorrichtung des Werkstücktisches gelangen, sofern nicht aufwendige und teure Abdichtungsmaßnahmen getroffen worden sind.

Der Erfindung liegt die Aufgabe zugrunde eine Werkzeugmaschine der vorgenannten Gattung zu schaffen, bei der die Möglichkeit einer Integration eines Palettenwechslers und/oder Werkzeugwechslers gegeben ist. Das Gehäuse soll schnell und einfach montierbar sein, um eine schnellen Austausch von eingebauten Elementen zu gewährleisten. Ferner sollen mit der Maschine gleichzeitig voluminöse und schwere Bauteile gefertigt werden können.

Erfindungsgemäss wird die Aufgabe dadurch gelöst, die vordere Tür Vergrösserung des Arbeits- und Beladebereichs nach oben holmenfrei ausgebildet ist, der Dachbereich der Maschine eine automatisch bedienbare Abdeckung aufweist, der hintere Bereich der Maschine einen integrierbaren automatischen Palettenwechsler aufweist und der Maschine ein automatischer Werkzeugwechsler zugeordnet ist.

Die Maschine kann als 3- oder 5-Achsen Anordnung ausgebildet sein. In die erfindungsgemässe Maschine ist ein Mehrfachpalettenwechsler, ein Werkzeugmagazin mit Werkzeugwechsler integriert. In der Regel ist die Maschine mit leistungsstarken Motorspindeln ausgerüstet.

Gemäss einer besonders bevorzugten Ausführungsform weist die Werkzeugmaschine eine automatische Abdeckung auf, die als Faltenbalg ausgebildet ist.

Durch die Verwendung eines Faltenbalges im Dachbereich der Maschine kann im Zusammenhang mit der holmenfreien Tür ein grosser Raum zum Beladen von voluminöse Teilen geschaffen werden. Die Abdeckung kann erfindungsgemäss am Schlitten und/oder an der oberen Kante der vorderen Türseite verbunden werden. Der Faltenbalg kann mit Hilfe des Schlittens ent- oder gefaltet und von der Türseite wegbewegt werden, damit eine freie nach oben offene Tür gebildet wird.

Vorzugsgemäss kann in die Werkzeugmaschine ein automatischer Palettenwechsler, der auf innerhalb der Maschine angeordneten Schienen parallel zu den Seitenwänden verschiebbar ist, integriert werden.

Durch das Vorhandensein eines automatischen Palettenwechslers kann der Bearbeitungsprozess in bedeutender Weise optimiert werden. Der automatische Palettenwechsel kann bei Serienbearbeitung zeitsparend eingesetzt werden.

Gemäss einer besonders bevorzugten Ausführungsform weist der Palettenwechsler mindestens zwei mechanisch, elektromechanisch oder hydraulisch betätigbare Auflagen zur Aufnahme der Paletten auf, wobei die Auflagen auf einem verschieb- und drehbaren Wagen angeordnet sind.

Der Palettenwechsler besitzt bevorzugt zwei gegenüberliegende Aufnahmen für Paletten, auf denen die zu bearbeitenden Werkstücke liegen. In einem ersten Schritt fährt der Palettenwechsler mit der zur Arbeitsfläche gerichteten Aufnahme zum Werktisch und lädt die Palette mit dem Werkstück auf den Arbeitstisch ab. Nach der Bearbeitung des Werkstückes holt der Wagen die Palette mit dem Werkstück ab, fährt zurück, holt mit der leeren von der Maschine weggerichteten Aufnahme eine weitere Palette mit einem noch zu bearbeiteten Werkstück ab, die Aufnahmen werden um 180° gedreht, um die Palette mit dem bearbeiteten Werkstück einerseits abzuladen und andererseits die Palette mit dem noch zu bearbeiteten Werkstück zum Maschinenwerkstück zu bringen. Im übrigen kann an den Palettenwechsler ein automatisch bedienbares Palettenmagazin angeschlossen werden.

In vorteilhafter Weise ist der Werkzeugmaschinen ein automatischer Werkzeugwechsler zugeordnet, der durch eine seitliche Tür im Gehäuse der Maschine zum Wechseln der Werkzeuge dient, wobei die Werkzeuge aus einem direkt neben der Maschine angeordneten Werkzeugmagazin abgelegt und geholt werden.

Die Werkzeugmaschine ist erfindungsgemäss so ausgebildet, dass die Sicht und die Zugänglichkeit auf das Werkstück bzw. zum Arbeitsraum während des Bearbeitens, des Palettenwechselns oder des Werkzeugwechselns uneingeschränkt ist.

Im folgenden sind Ausführungsbeispiele der Erfindung in der Zeichnung dargestellt und näher beschrieben. Es zeigen:
- Fig. 1: eine Werkzeugmaschine in 3- Achsen Ausführung
- Fig. 2: eine Werkzeugmaschine in 5- Achsen Ausführung
- Fig. 3 bis Fig. 6: einen in der Maschine integrierten Palettenwechsler in verschiedenen Positionen
- Fig. 7: den Innenraum einer Maschine mit geschlossener Tür für den Werkzeugwechsler
- Fig. 8: den Innenraum einer Maschine mit geöffneter Tür für den Werkzeugwechsler

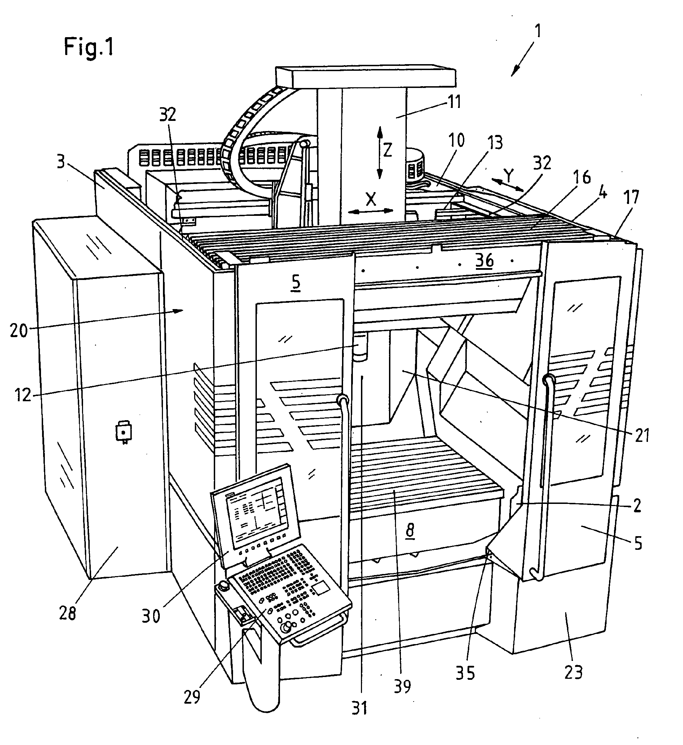

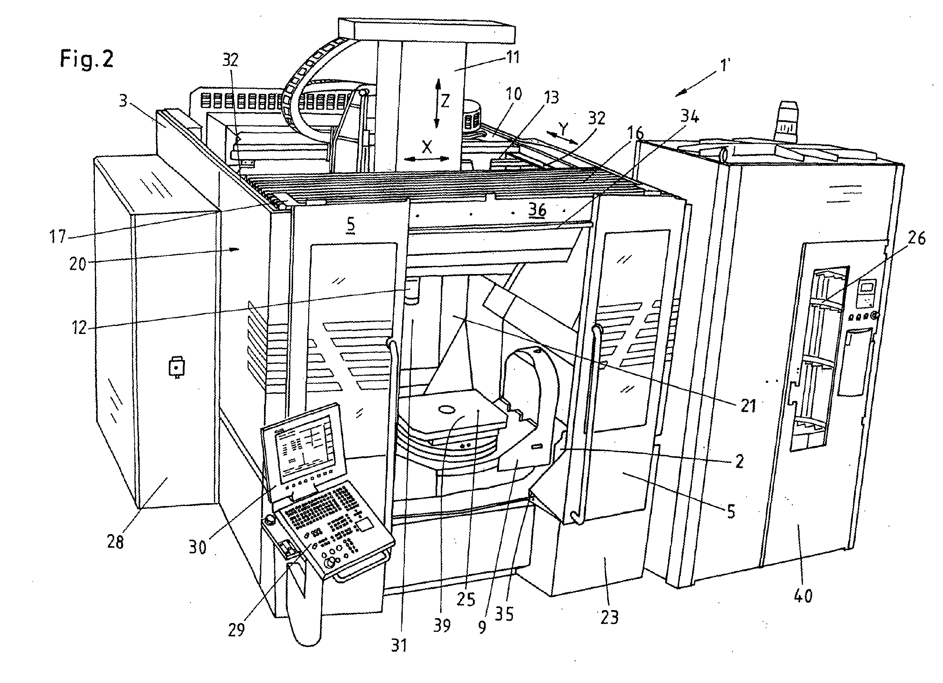

Die Figur 1 zeigt eine Werkzeugmaschine 1 in der 3- Achsenausführung. Die Figur 2 zeigt eine Werkzeugmaschine 1' in der 5- Achsenausführung. Die Bezugszeichen der beiden Maschinen 1 und 1' haben die gleiche Bedeutung. Das Gehäuse 20 besteht aus den Seitenwänden 3 und 4 und den vorderen und hinteren Türwänden 23 und 31 mit den Türen 5 und 6. Die vordere Tür 5 ist als zweiteilige Schiebetür ausgebildet, wobei die Türführungen 35 im unteren Bereich 39 der vordern Türwand 23 liegen und der obere Bereich 34 der Türwand 23 frei ist. Hierdurch wird ein freier Ladebereich 21 für gross-dimensionierte Teile ermöglicht. Im oberen Dachbereich 13 ist als teilweise Dachabdeckung ein Faltenbalg 16 mit der Traverse 36 vorgesehen, die an der oberen Kante 17 der vorderen Türseite 23 lösbar verbunden ist. Der Faltenbalg 16 wird mittels des Schlittens 10 ge- oder entfaltet. Die hintere Tür 6 ist als Klapptür ausgestaltet und dient zur Zuführung von durch den automatischen im hinteren Maschinenbereich 22 angeordneten Palettenwechsler 14 (in den Figuren 1 und 2 nicht zu sehen) gelieferten Paletten. Der Schlitten 10 ist entlang der Schienen 32 der Seitenwände 3 und 4 in y-Richtung verfahrbar. An dem Schlitten 10 ist der Spindelstock 11 mit dem Werkzeug 12 in x- und z- Richtung verschiebbar angeordnet. Das Gehäuse 20 umschliesst den Maschinenbett 2 mit dem festen Werktisch 8 in Figur 1 und dem dreh- und schwenkbaren Tisch 9 in der Figur 2. In Figur 1 ist seitlich der Maschine ein Schrank 28 für die Elektrik der Maschine angeordnet. Die Maschine ist über die Konsole 29, die mit einem Monitor 30 versehen ist, bedienbar. In der rechten Seitenwand 4 des Gehäuses 20 ist eine Tür 7 als Zugang für den Werkzeugwechsel vorgesehen. Die in Figur 2 dargestellte Maschine 1' zeigt einen als Werkzeugmagazin 26 dienenden Schrank 40. Die Werkzeuge werden mittels eines in den Figuren 1 und 1' nicht gezeigten Werkzeugwechsler an die Spindelstock 11 geliefert.

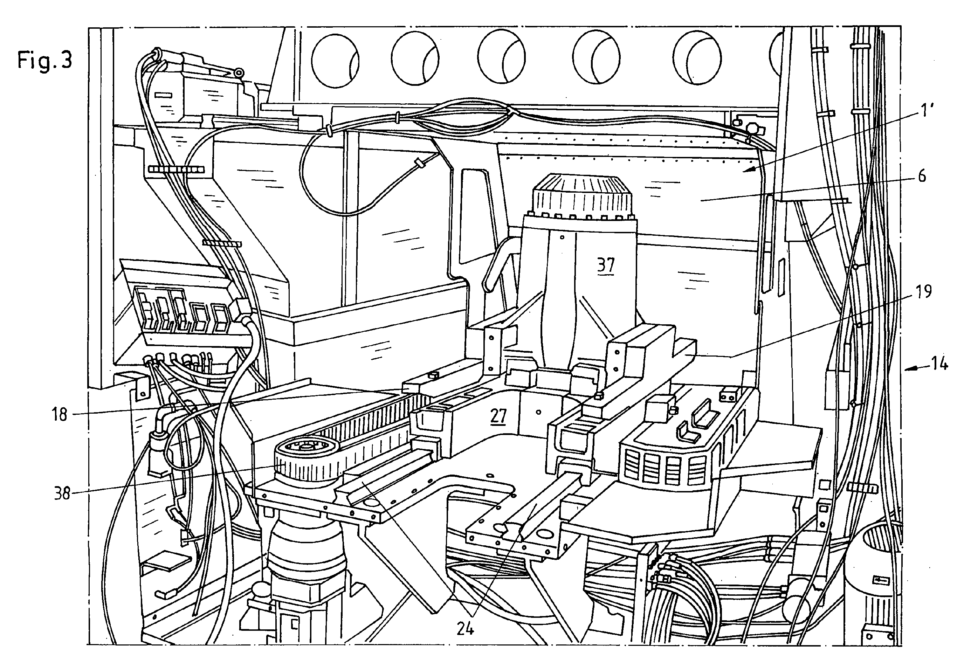

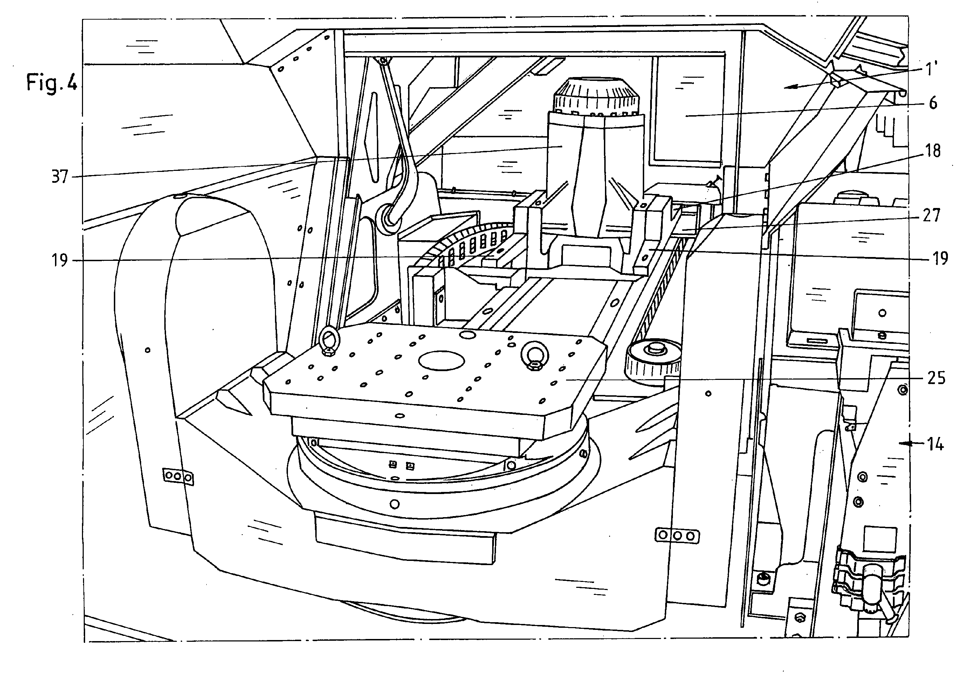

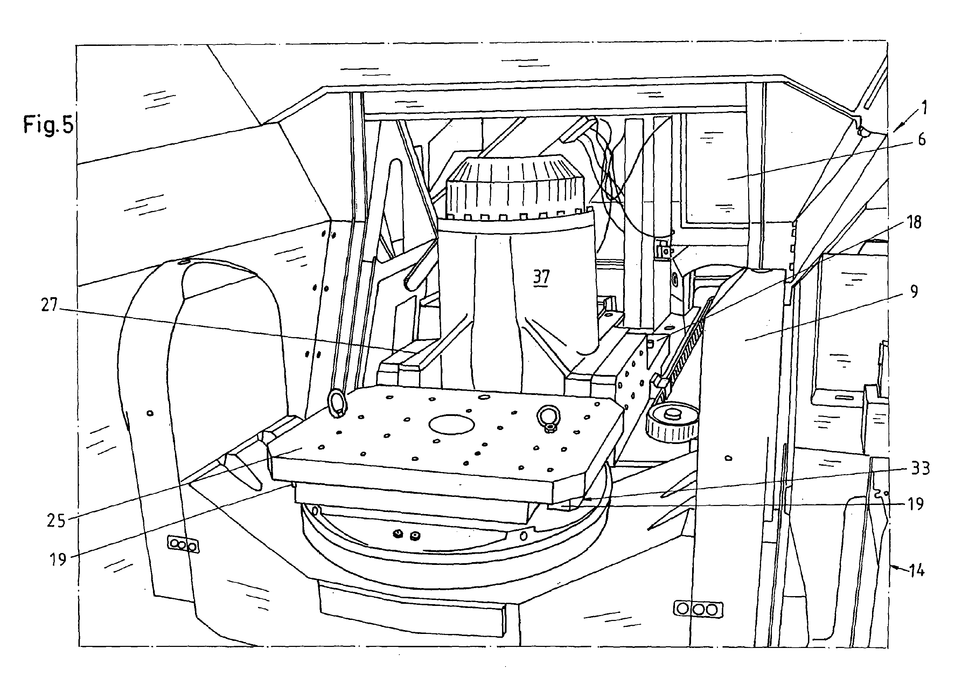

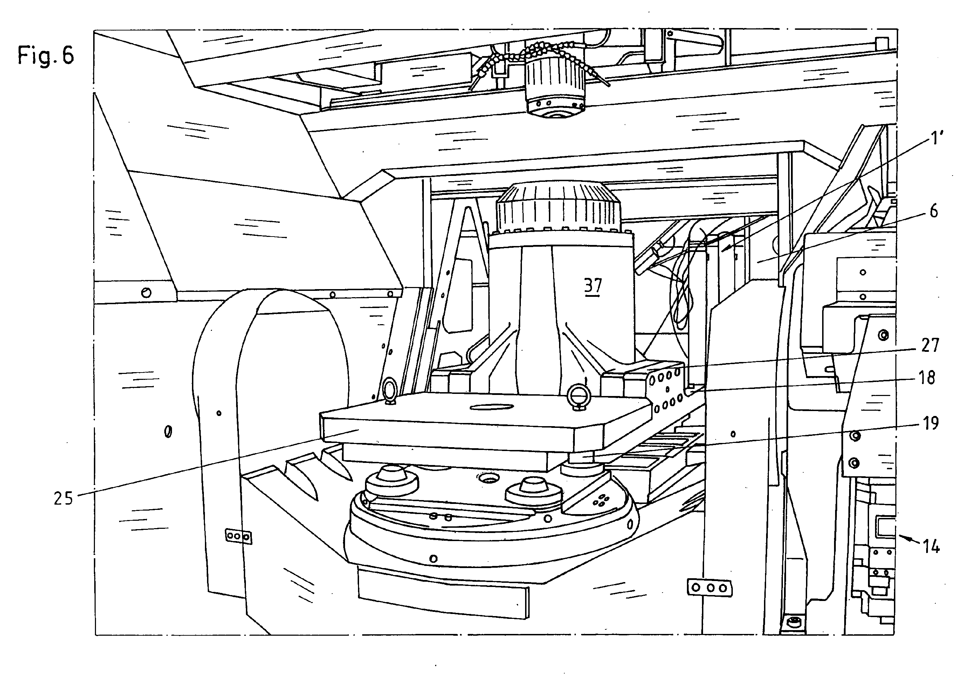

In den Figuren 3 bis 6 ist der in die Werkzeugmaschine integrierte Palettenwechsler 14 gezeigt. Ein Wagen 27 ist auf Schienen 24 parallel zu den Seitenwänden 3 und 4 der Maschine 1 verfahrbar, wobei die Schienen 24 durch die hintere als Klapptür ausgebildete Tür 6 geführt sind. In der Mitte des Wagens 27 ist eine Hydraulikvorrichtung 37 angeordnet, die jeweils zwei nach vorne und nach hinten gerichtete Auflagen 18 und 19 in der Weise bedient, dass die zu transportierenden und zu wechselnden Paletten 25 angehoben bzw. abgesenkt oder gedreht werden. Der Wagen wird mittels eines Zahnradriemens 38 angetrieben. Die Figur 3 zeigt den Wagen 27 mit einer leeren Auflage 18 und 19 vor der geschlossenen Tür 6 der Maschine 1. In Figur 4 ist die Tür 6 geöffnet, der Wagen 27 bewegt sich mit der leeren Auflage 19 in Richtung Werktisch 9, um die Palette 25 zu holen. In Figur 5 greifen die Arme 33 der Auflage 19 unter die Palette 25. In Figur 6 ist die Palette 25 durch die hydraulisch angehobene Auflage 19 zum Abtransport gezeigt. Ausserhalb kann der Wagen 27 mit den Auflagen 18 und 19 um 180° gedreht werden und beispielsweise eine neue Palette dem Werktisch 9 in umgekehrter Weise zugeführt werden.

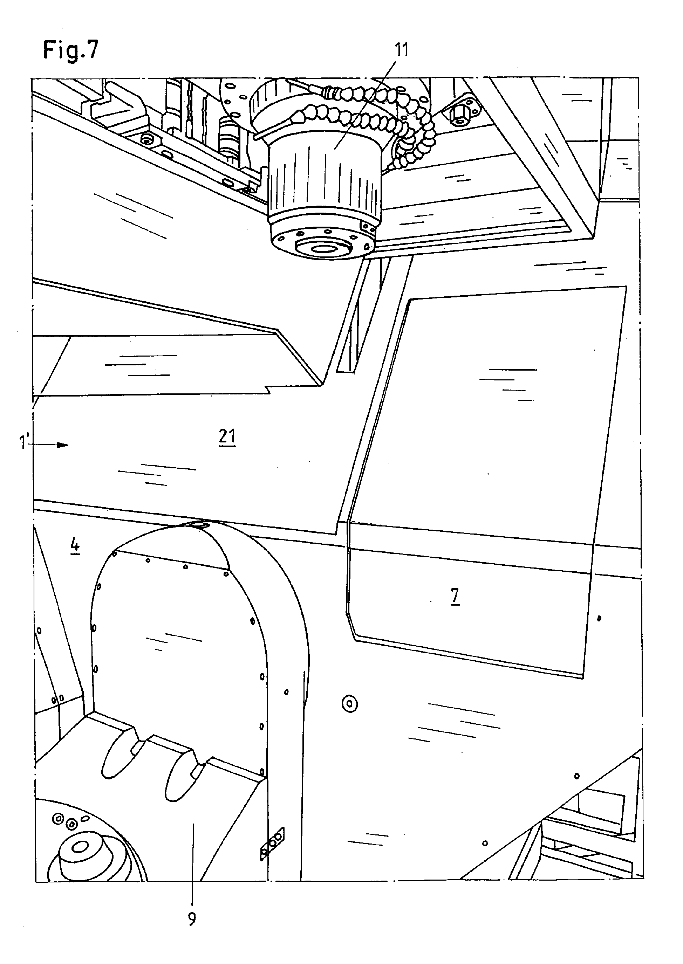

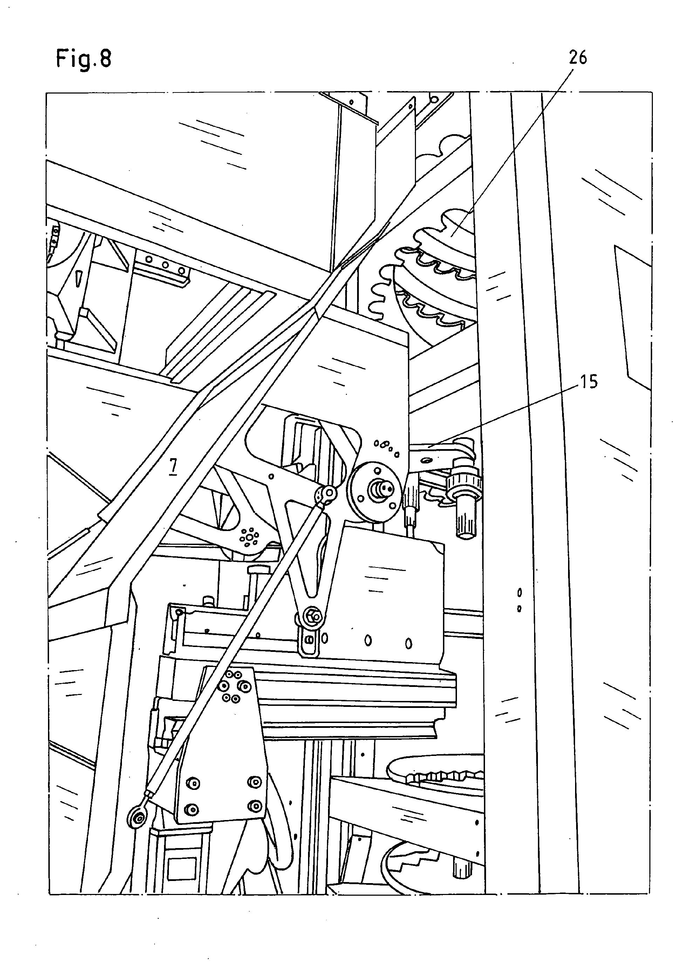

Die Figuren 7 und 8 zeigen die Tür 7 in der Seitenwand 4 der Maschine 1'. Diese Tür 7 dient der Zuführung eines Werkzeugwechslers 15. Die als nach oben klappbare Tür ist in Figur 7 geschlossen. In Figur 8 ragt ein Werkzeugwechsler 15 in den Maschinenraum 21, um Werkzeuge aus dem Werkzeugmagazin 26 zu holen und an den Spindelstock 11 zu liefern.

Die mit der erfindungsgemässen Werkzeugmaschine verbundenen Vorteile liegen insbesondere darin eine kompakte Maschine zu liefern, die geeignet ist durch die Integration eines Palettenwechslers und eines Werkzeugwechslers schnell Paletten bzw. Werkzeuge zu wechseln unter Beibehaltung von einer uneingeschränkten Sicht auf das Werkstück Die Zugänglichkeit für den Bediener zum Arbeitsraum wird weder durch den Palettenwechsler noch den Werkzeugwechsler eingeschränkt. Weiter kann der Palettenwechsler ohne weiteres an ein Palettenmagazin angeschlossen werden. Darüber hinaus ist es möglich aufgrund der speziellen Dachkonstruktion, grosse Teile in den Arbeitsraum zu befördern und mit höchster Präzision zu bearbeiten.

### Bezugszeichenliste

- 1': Maschine (5-Achsen)
- 1: Maschine (3-Achsen)
- 2: Maschinenbett
- 3: Seitenwand (links)
- 4: Seitenwand (rechts)
- 5: Tür (vorne)
- 6: Tür (hinten)
- 7: Tür (Seite)
- 8: Werktisch (fest)
- 9: Werktisch (schwenk- und drehbar)
- 10: Schlitten
- 11: Spindelstock
- 12: Werkzeug
- 13: Dachbereich
- 14: Palettenwechsler
- 15: Werkzeugwechsler
- 16: Abdeckung
- 17: Obere Kante
- 18: Auflage
- 19: Auflage
- 20: Gehäuse
- 21: Arbeits- und Beladebereich
- 22: Hinterer Maschinenbereich
- 23: Vordere Türseite
- 24: Schienen
- 25: Palette
- 26: Werkzeugmagazin
- 27: Wagen
- 28: Schrank
- 29: Konsole
- 30: Monitor
- 31: Türwand
- 32: Schienen
- 33: Arme
- 34: oberer Bereich
- 35: Türführungen
- 36: Traverse
- 37: Hydraulikanordnung
- 38: Zahradriemen
- 39: vorderer Bereich
- 40: Schrank

## Patentansprüche

1. Werkzeugmaschine (1, 1'), insbesondere Bohr- und Fräsmaschine mit einem Maschinenbett (2), mit Seitenwänden (3, 4) und Türen (5, 6, 7) aufweisenden Gehäuse (20), mit einem festen, schwenk- oder drehbaren Werktisch (8, 9) und mit einem in y - Richtung verfahrbaren Schlitten (10) zur Aufnahme eines in x - z Richtung verfahrbaren Spindelstocks (11) zur Aufnahme von Werkzeugen (12), **dadurch gekennzeichnet, dass**
die vordere Tür (5) Vergrösserung des Arbeits- und Beladebereichs (21) nach oben holmenfrei ausgebildet ist,
der Dachbereich (13) der Maschine (1, 1') eine automatisch bedienbare Abdeckung (16) aufweist,
der hintere Bereich (22) der Maschine (1, 1') einen integrierbaren automatischen Palettenwechsler(14) aufweist und
der Maschine (1, 1') ein automatischer Werkzeugwechsler (15) zugeordnet ist.

2. Werkzeugmaschine nach Anspruch 1, **dadurch gekennzeichnet, dass** die automatische Abdeckung (16) als Faltenbalg ausgebildet ist.

3. Werkzeugmaschine nach Anspruch 2, **dadurch gekennzeichnet, dass** die Abdeckung (16) am Schlitten (10) und/oder an der oberen Kante (17) der vorderen Türseite (23) lösbar verbindbar ist.

4. Werkzeugmaschine nach mindestens einem der vorherigen Ansprüche, **dadurch gekennzeichnet, dass** der automatische Palettenwechsler (14) einen Wagen (27) aufweist, der auf innerhalb der Maschine (1, 1') angeordneten Schienen (24) parallel zu den Seitenwänden (3, 4) verschiebbar ist.

5. Werkzeugmaschine nach Anspruch 4, **dadurch gekennzeichnet, dass** der Palettenwechsler (14) mindestens zwei mechanisch, elektromechanisch oder hydraulisch betätigbare Auflagen (18, 19) zur Aufnahme der Paletten (25) aufweist, wobei die Auflagen heb-, senk- und drehbar auf einem verschiebbar gelagerten Wagen (27) angeordnet sind.

6. Werkzeugmaschine nach Anspruch 5, **dadurch gekennzeichnet, dass** der Palettenwechsler (14) an ein automatisches Palettenmagazin anschliessbar ist.

7. Werkzeugmaschine nach mindestens einem der vorherigen Ansprüche, **dadurch gekennzeichnet, dass** die Sicht und die Zugänglichkeit auf das Werkstück bzw. zum Arbeitsraum während des Bearbeitens, des Palettenwechselns oder des Werkzeugwechselns uneingeschränkt ist.

8. Werkzeugmaschine nach mindestens einem der vorherigen Ansprüche, **dadurch gekennzeichnet, dass** der automatische Werkzeugwechsler (15) zur Bedienung der Maschine (1, 1') durch eine seitliche Tür (7) im Gehäuse (20) der Maschine (1, 1') zum Wechseln der Werkzeuge (12) einbringbar ist, wobei die Werkzeuge (12) aus einem direkt neben der Maschine (1, 1') angeordneten Werkzeugmagazin (26) entnehmbar sind.
